Europäisches Patentamt

European Patent Office

Office européen des brevets

(11) Publication number: **0 053 032**
**B1**

(12) **EUROPEAN PATENT SPECIFICATION**

(45) Date of publication of patent specification: **20.08.86**

(51) Int. Cl.⁴: **G 01 S 7/22**

(21) Application number: **81305532.4**

(22) Date of filing: **24.11.81**

(54) **Radar PPI display.**

(30) Priority: **24.11.80 US 209476**

(43) Date of publication of application:
**02.06.82 Bulletin 82/22**

(45) Publication of the grant of the patent:
**20.08.86 Bulletin 86/34**

(84) Designated Contracting States:
**DE FR GB IT**

(56) References cited:
**DE-B-2 147 524**
**US-A-3 794 993**
**US-A-4 208 657**
**US-A-4 224 619**
**US-A-4 224 621**

(73) Proprietor: **Anderson, Lawrence Forsyth**
**2955 Merced Street**
**San Leandro California 94577 (US)**

(72) Inventor: **Anderson, Lawrence Forsyth**
**2955 Merced Street**
**San Leandro California 94577 (US)**
Inventor: **Olazabal, Gerald Michelena**
**2118 Coloma Street**
**Oakland California 94602 (US)**

(74) Representative: **Lawson, David Glynne et al**
**MARKS & CLERK 57-60 Lincoln's Inn Fields**
**London WC2A 3LS (GB)**

Courier Press, Leamington Spa, England.

## Description

There have been developed a wide variety of collision warning and avoidance systems. These normally incorporate means for deriving the range, bearing and course of objects detected and commonly refer these to the course and speed of the vehicle carrying the system. Many systems of this general nature have heen developed for use with ships, aircraft traffic control, military defence systems, and the like, and it is conventional for these systems to incorporate substantial complexity. It is in fact necessary for many applications of this type of system to provide a large amount of information in order to accurately apprise an operator of the true danger of collision or interception for substantially instantaneous decisions concerning change of course, for example. Some of these systems are in fact designed for the interception of missiles and, consequently, must be extremely accurate and all-encompassing insofar as information provided.

Historically, the outputs of these systems, consisting predominantly of predictive vectors, track histories, and degree-of-thread symbology, have been presented to the operator in one of two manners. The most common and successful approach has been to provide an auxiliary dedicated display system wherein the electron beam may be rapidly moved in any direction or to any location at will, commonly known as a stroke-generator display. This has permitted visually simultaneous presentation of graphics and PPI by interleaving in time two types of sweeps: the graphic data being drawn by linear (X—Y) beam deflection and the PPI data by Rho-theta beam deflection. The deflection circuitry required to achieve both arbitrary X—Y and Rho-theta deflection of the beam is substantially more complex and expensive than that used for Rho-theta deflection alone. Obviously, such an approach is practical for new systems that are intended to be used with collision avoidance system graphics, but is a very expensive and difficult to implement solution where it is desired to upgrade an existing radar which has no such capabilities. It is noted that a plan position indicator (PPI) display system was originally implemented using a Rho-theta display only; however, such a system may now also include separate beam deflection control as in U.S. Patent No. 4,155,085. A means for generating a PPI display on an X—Y display system is shown in U.S. Patent No. 3,794,993, while U.S. Patent No. 3,769,403 is exemplary of graphics on an X—Y display having separate beam control. The alternative approach has been to superimpose data on the commonly existing PPI display without separate beam deflection capability, but this approach has generally been limited to presentation of radial lines such as an electronic bearing line (EBL), circles about the origin such as a variable range marker (VRM), or dots because of the nature of the Rho-theta sweep employed on virtually all PPI displays. For example, see U.S. Patent Nos. 3,648,283 and 3,646,557.

Patent No. 4,208,657 describes a system for the presentation of computer generated data on an existing Rho-theta display, employing a large memory to store the coordinates of a series of points, and to unblank the CRT when the instantaneous range and bearing of the electron beam coincide with the coordinates of a stored point. The drawing of a single line on the display therefore requires the storage of a coordinate for each resolvable point on the line; for typical displays this can easily equal several hundred points per line. The technique employed by this patent rquires a memory location to be allocated to every point which is to be displayed. In fact, given a reasonable memory size, either the amount of data to be displayed must be severely limited, or the resolution of the displayed data must degrade, or the synthetic display data must be dim, because only a few of the points within a displayed line can be accessed and displayed. Moreover, since a single comparator is used to detect coincidence of points, the points must be stored in the memory monotonically (increasing range at each increasing bearing increment). This places a severe burden on the computer generating the display data since the data must be recorded each time it is altered, causing significant delay in the presentation of trial maneuvers or operator command changes from relative Motion to True Motion and from head-up to notth-up display.

The present invention operates on an entirely different principle, the generation of lines through real-time trigonometric manipulation. The collision avoidance computer is thus relieved of the tasks of point-by-point coordinate generation and the ordering of the various points monotonically.

It will be appreciated that a non-radial straight line cannot be displayed on a Rho-theta display without resort to trigonometric manipulation. Prior art approaches have occasionally attempted to perform this manipulation in a digital computer, but performances have been severely limited due to the large numbers of computations involved and the sequential nature of prior art display generation circuitry.

Aside from the above-noted memory system, prior art capability of depicating non-radial lines on a Rho-theta display has depended upon the ability to independently deflect the beam in addition to the normal radial deflection and angular sequencing. Commonly this is accomplished in a display, separate from the radar display, that is dedicated as a Radar Plotting aid or Collision Avoidance System, although in some cases a special display for Radar Plotting Aid is incorporated in the radar system itself. U.S. Patent No. 3,383,677 is exemplary of such an auxiliary display. It should be noted that on many smaller vessels there is not sufficient space on the bridge for an auxiliary or dedicated display. Both the high cost of the prior art approaches and this lack of space have inhibited the wide use of much needed Collision Avoidance Systems.

German Patent Specification AS 21 47 524 discloses an arrangement for displaying an auxiliary line on the screen of a cathode ray tube, which may have a Rho-theta display, for use in an approach radar.

The object of the present invention is to provide a simple modification of a Rho-theta display, capable of generating any straight line or dot or assembly of dots to generate a symbol.

According to the present invention, there is provided a display system for displaying non-radial vector lines representing course and speed of radar targets on a Rho-theta display of a PPI scope having only a radially swept beam indexed circumferentially about the display, comprising computing means calculating the coordinates of points to be displayed on a subsequent sweep and controlling means unblanking the beam at successive preselected bearings and ranges to display non-radial lines on the PPI scope without additionally deflecting the beam, characterised by said computing means being arranged for receiving radar information and producing, for each selected target, signals representing target bearing and the range and bearing of the tangent point on a circle about the centre of the display of the vector line to be displayed, a memory unit storing incremental secant functions, arithmetic means calculating the product of the tangent point range and the secant of the angle between the instantaneous target bearing and tangent point bearing, and means applying the results of said calculations to selectively unblank the beam of said Rho-theta display for displaying non-radial lines.

The present invention displays non-radial lines on a Rho-theta display without separately deflecting the beam, by unblanking the beam or turning it on and off at particular ranges and bearings so that no modification of existing radar or radar display is required. The present invention is thus less complex and may be readily employed with existing equipment.

The present invention provides for the display of the requisite information on the existing PPI display of a conventional radar system having no separate beam deflection at a very low cost, and without occupying valuable bridge space. All functions presently provided by high cost systems can be accommodated herein, including trial maneuver, true motion, and relative motion presentation at full intensity.

The present invention provides the capability of generating any straight line or dot, which is a special case of a straight line, on any standard Rho-theta display without additionally deflecting the beam and is compatible with any common digital computer. Computer data, in digital form, is operated on in real time to provide only unblanking data for a PPI sweep at proper instants in order to provide a full intensity trace of a line vector or symbol on a PPI display.

The present invention operates to insert display data consisting of discrete lines and/or dots from a collision avoidance system computer into a data memory. Radial lines and dots are defined in terms of the desired bearing and the start/stop range. Non-radial lines are defined in terms of the range and bearing of the point at which the line, if extended to infinity, would be tangent to a circle about the PPI origin, together with the start/stop range and start/stop bearing information. Both range and bearing limits are required because of the display system's insensitivity to bearing limits for near radial lines and to range limits for near tangent lines.

There is provided herein an arithmetic unit for examining each line record in turn and determining by subtraction the subtended angle $\theta$ between the current electron beam bearing and the bearing to the tangent point, as noted above. This angle $\theta$ is employed to produce an output from a read-only memory lookup table containing the secant function of angles. The resultant secant value obtained from a read-only memory is multiplied by the range to the tangent point to derive the value $R\sec\theta$. The electron beam bearing is then incremented by normal radar operation and a second value of $R\sec\theta$ obtained with the difference of these values being equal to range extent of the line at the instantaneous bearing of the electron beam.

It will be seen that the present invention operates to selectively unblank the CRT tube of a PPI display by operating upon each radar beam with sufficient speed to unblank the scope at the determined range so that there is ultimately traced upon the scope a line having the proper range and bearing at all points thereof to depict a vector representing the course of a target. This vector is depicted at full intensity upon the PPI display in distinction to prior art depiction of very low intensity dots which are commonly achieved only by access to a memory containing point locations upon a display rather than computation of individual and successive points of a line. It will, of course, be appreciated that the line or dot is produced on the PPI display only to be "repainted" during the next 360° revolution of the radar beam.

It will be appreciated that by issuing a number of line segment records, the associated computer can form any desired alphanumeric or graphic display. Obviously, as the number of line segments to be displayed increases, so does the computational burden on the arithmetic circuits. In the preferred embodiment up to 128 lines may be defined at any given instant. Additional lines could be accommodated by the identical technique, simply by paralleling additional arithmetic units and memories.

The present invention is illustrated as to a particular preferred embodiment thereof and display produced thereby in the accompanying drawings, wherein:

Figure 1 is a block diagram of a collision avoidance system including the present invention;

Figure 2 is schematic illustration of a PPI display with particular angles and ranges indicated thereon, as employed in the present invention;

Figure 3 is a block diagram of a circuit capable of carrying out the present invention.

The present invention comprises a system for automatically converting computer output symbology to a format compatible with a Rho-Theta display sweep in real time. The present invention is particularly directed to ship collision systems employing conventional maritime radar; however, it will be appreciated that the invention is also applicable to other vehicles such as aircraft, and to other types of displays employing circular, sector, or other types of non-linear sweeps, as for example, aircraft weather radar.

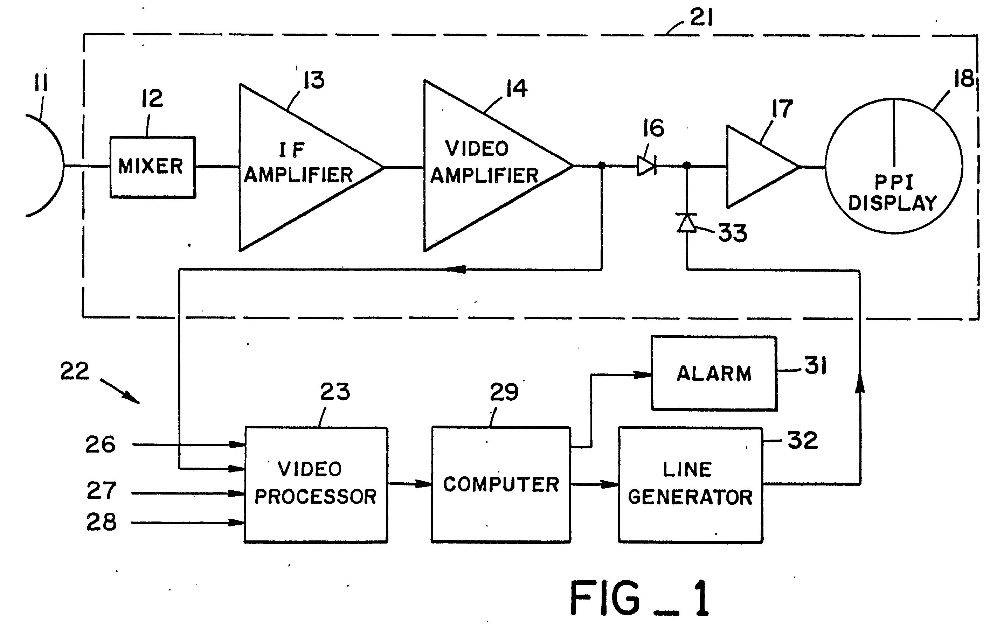

Considering now a preferred embodiment of the present invention and referring to Figure 1 of the drawings, there will be seen to be illustrated a typical marine radar receiver and collision avoidance system. A radar beam is propagated from an antenna 11 and the reflections of the beam targets or the like received at the antenna are applied to a mixer 12 having an output applied through an IF amplifier 13 and a video amplifier 14. The output of the video amplifier is shown to be connected through a coupling diode 16 and video amplifier 17 to a PPI display 18. This conventional radar system, in part illustrated in the dashed line 21, visually displays upon the scope of the PPI 18 fluorescent indications of objects reflecting radar signals to the receiver and range marks by means of which the range and bearing of such objects may be determined. This scope and the screen thereof is thus available to identify the presence of objects within the radar range and is actuated to repeat the visual indication for every 360° sweep of the radar antenna. The video amplifier 14 produces the signals displayed by the scope and the present invention operates to superimpose computer-generated information on this same display.

A collision avoidance system generally indicated at 22 is connected to receive at an input video processor 23 thereof video signals from the output of the radar amplifier 14 and also this processor receives from the radar set ship heading information on input line 26, target range on input line 27, and target azimuth on line 28. The output of the video processor 23 is applied to a collision avoidance system computer 29 which produces output signals applied first to an audio/ visual alarm 31 and secondly to a line generator 32 of the present invention and further described below. The output of the line generator 32 is coupled through a diode 33 to the input of the amplifier 17 ahead of the PPI display 18 so that both radar information and lines and dots generated by the present invention are displayed upon this single PPI display.

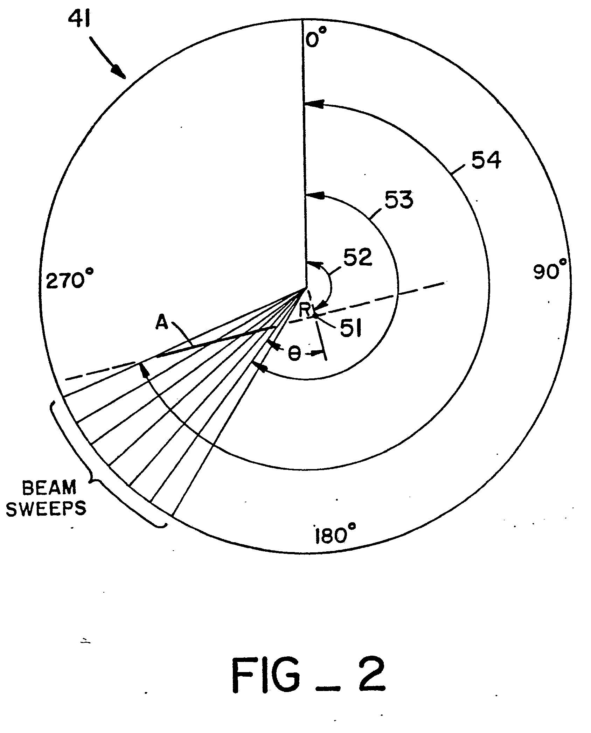

The line generator 32 of the present invention receives data from the computer 29 which is programmed to provide certain information for each line or vector to be displayed on the PPI scope. A non-radial line that is to be displayed on the PPI scope is defined by digital signals from the computer in terms of the range and bearing of the point at which the line, extended to infinity, is tangent to a circle about the PPI origin, together with start/stop range and start/stop bearing information. In this respect reference is made to Figure 2 wherein a line A is shown on a PPI scope 41 with a dashed extension thereof for establishing a tangent point 51 whereat the extension of the line A is tangent to a circle about the center of the PPI scope. This tangent point 51 has a tangent bearing 52 and a tangent range R, as shown in Figure 2. The line A is also defined in terms of a start bearing 53 measured from the heading of the vessel carrying the equipment and a stop bearing 54 similarly measured. These bearings define the bearing extent of the line A. The line A is also defined in terms of a start range which is the range of the end of the line closest to the center of the PPI scope and a stop range which is the range of the line furthest from the center of the scope. The foregoing data is determined by the computer 29 and the present invention in the line generator 32 employs an arithmetic unit to examine each line record in turn for each successive radar beam transmitted from the antenna to determine by subtraction the angle $\theta$ between the current electron beam bearing and the bearing to the tangent point 51. This angle $\theta$ is illustrated in Figure 2 between the tangent point 51 and the start bearing of the line A; however, it will be appreciated that the angle increases, in this example, for each successive radar beam transmitted from the antenna about the circumference of the sweep. These successive beams are illustrated by radial lines in Figure 2 encompassing the line A to be displayed on the scope.

The present invention employs a read-only memory to store the values of the trigonometric secant function for successive angles at small increments of 0.08°, for example. The secant of $\theta$ is multiplied by the range R to the tangent point to thus derive the value of $R\sec\theta$. It will be appreciated that trigonometrically, the secant is the hypotenuse of a right triangle divided by the side adjacent the angle and thus $R\sec\theta$ is the range to the line at the instantaneous electron beam bearing. As the electron beam is incremented in bearing by the radar, a second value of $R\sec\theta$ is obtained, with the difference of these values being equal to the range extent of the line at that instantaneous bearing of the electron beam.

The present invention furthermore provides for comparing and foregoing range extent with the start/stop range values provided by the computer in order to effect any necessary truncation or shortening of the line and the resultant range extent is written into an output memory for display on the ensuing sweep.

The line A is displayed on the scope 41 by unblanking the beam of the scope at a selected range for successive bearings and it will be appreciated that the foregoing computations are performed for each radar beam transmitted by the receiver and returned thereto by a target as the beam is incremented about 360° in accordance with general practice. In distinction to conventional approaches to the problem of displaying a non-radial line on a PPI scope it is not necessary herein to store information as to range and bearing of a large plurality of points. Only a small memory is required herein, although extremely rapid operation of the circuitry is necessary and it will be appreciated that by unblanking the beam of the scope to form the line A the present invention produces a full intensity line display.

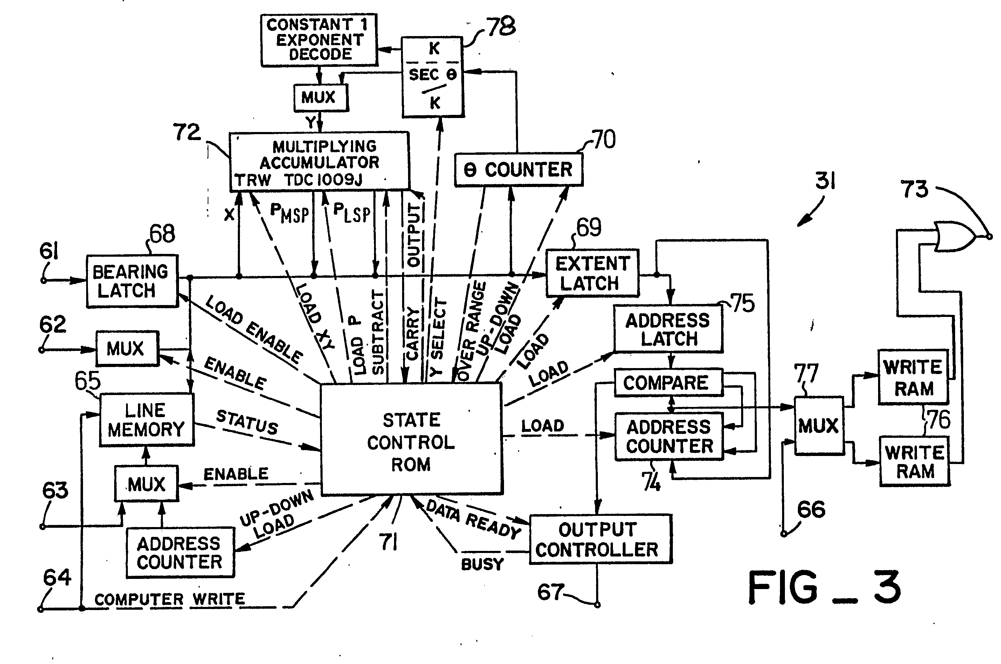

The line generator 32 of the present invention may be implemented in a variety of ways and in Figure 3 there is schematically illustrated one manner of implementation. It is noted in this respect that a conventional abbreviation MUX is employed in this drawing to define a multiplexer. Input terminals are provided from the radar set and computer. Terminal 61 receives the instantaneous bearing while terminal 62 is connected to a data bus from the computer 29 to receive range and bearing of the tangent point and start/stop range and bearing information for a non-radial line. A terminal 63 is connected to a computer address bus and terminal 64 is connected to a computer write bus. Radar range signals are applied to terminal 66 and a transmit sync signal from the radar set is applied to terminal 67. It will be seen that the line generator of Figure 3 is controlled by a state control ROM 71 which is so termed because it operates to change the state of system components. The input portion of the generator is relatively straightforward; however, it is noted that the multiplying accumulator 72 is a high-speed multi-function arithmetic unit capable of performing N×N bit multiplication and product accumulation and, while alternative devices may be employed, model TDC 1009J marketed by TRW, Inc., of Rodondo Beach, California, has been found to be particularly applicable. The inputs of this device are denominated X and Y in accordance with the manufacturer's terminology. Alternatively, multiplying D/A—A/D converters could be employed.

. In the preferred embodiment of Figure 3 there are provided a line memory 65 with means for line data to be inserted in said memory by the Collision Avoidance System computer, a multiplying accumulator unit 72 (such as the above-mentioned LSI device manufactured by TRW, Inc.) a second memory 78 read-only memory look-up table containing the secant function of all angles from 0 to 90° in increments of 0.08°, appropriate storage latches 68, 69 containing instantaneous bearing and range information concerning the present position of the electron beam, an output memory system capable of "or" ing the range extents of all lines to be displayed on the ensuing sweep, and a state control ROM or state controller 71 which appropriately sequences the above-mentioned circuit elements.

To better understand the operation of the above circuitry, assume that a line record has been inserted in the line memory. The state controller 71 accesses status word locations within the line memory 65 until a valid record flag is detected within the status word. Upon detection of a valid record, a radial flag is interrogated since the Rsec$\theta$ is meaningless for $\theta$=90°, (secant of 90°=$\infty$). A radial line record is passed to the output circuits directly whenever the instantaneous bearing is equal to the desired radial bearing.

If the line record is for a non-radial line, the start bearing of the line is compared to the instantaneous bearing by subtraction in the multiplying accumulator 72. Similarly, the instantaneous bearing is compared to the stop bearing in like manner. If the instantaneous bearing is outside the bearing limits, then the computation is aborted and the sequencer proceeds to the next valid line record.

When the instantaneous bearing is within the start/stop bearing limits, the tangent bearing, that is the bearing to the point at which the desired line is tangent to a circle about the origin of the sweep, is subtracted from the instantaneous bearing. If the angle so described herein referred to as $\theta$ is negative, the operands are reversed in the multiplying accumulator to yield a positive $\theta$. The value of $\theta$ so derived is inserted into the $\theta$ counter 70 whose output forms the address to the second or secant function memory 78.

The value of secant $\theta$ so derived is now applied to the y input of the multiplier 72 (in the foregoing the y input was=1) while the range to the tangent point (defined above) is applied to the X input from terminal 62, yielding the value of Rsec$\theta$ at the current instantaneous bearing. Note that a floating point multiplier system is employed. This value of Rsec$\theta$ is stored in the range extent latch 69 while a similar computation is performed after the $\theta$ counter has been incremented, yielding a second value of Rsec$\theta$ corresponding to the angle $\theta$+.08°.

It will be appreciated that near the tangent point, both computations will yield the same value, defining a minimum range extent, while near the radial situation the values derived will be significantly different, yielding a large range extent. In any case, the values of Rsec$\theta$ as derived above are compared to Start/Stop range values from the line memory to truncate the line as required. Which range limit is compared against which Rsec$\theta$ value is determined by the sign of $\theta$ prior to the absolute value derivation, as described above.

The range limits derived above are inserted in the output counter 74 and latch 75, the counter simultaneously being compared to the latch and addressing one of two output memories 76, 1K words by 1 bit. The output circuits are arranged to write a "one" at the address specified by the counter, with the counter being incremented or decremented until equal to the latch value. In this manner ones but not zeros are inserted into every range address which is to be displayed on the ensuing sweep.

Additional lines are generated in like manner. It will be appreciated that the lines may therefore be stored in the line memory in any sequence and, in fact, may overlay each other, if desired.

As each sweep trigger (from radar) is received, an address multiplexer 77 is toggled, switching the two output RAM functions. The RAM previously written is read out in synchronization with the electron beam sweep, zeros being inserted after each read cycle to clear the RAM for the next write cycle, while the second RAM is being written. The RAM ouputs are applied to an output terminal 73 as a Z axis unblanking command to the PPI display.

Obviously, speed of computation is of paramount importance. In the preferred embodiment, the range extent of an individual line at a given instantaneous bearing is computed and stored in the output RAM in 6 microseconds or less, depending on the sign of θ and the required truncations. State controller is sequenced at very high speed (typically 10 MHZ). Thus, in the preferred embodiment, 60 lines can be accommodated in 360 microseconds, well within the retriggered period of conventional radars.

## Claims

1. A display system for displaying non-radial vector lines representing course and speed of radar targets on a Rho-theta display of a PPI scope (18) having only a radially swept beam indexed circumferentially about the display, comprising computing means (29) calculating the coordinates of points to be displayed on a subsequent sweep and controlling means (32) unblanking the beam at successive preselected bearings and ranges to display non-radial lines on the PPI scope (18) without additionally deflecting the beam, characterised by said computing means (29) being arranged for receiving radar information and producing, for each selected target, signals representing target bearing (61) and the range and bearing of the tangent point on a circle about the centre of the display of the vector line to be displayed, a memory unit (78) storing incremental secant functions, arithmetic means (79) calculating the product of the tangent point range and the secant of the angle between the instantaneous target bearing and tangent point bearing, and means (73—77) applying the results of said calculations to selectively unblank the beam of said Rho-theta display for displaying non-radial lines.

2. The display system of claim 1 characterised by a line memory (65) connected to receive line data from said computer and to apply line data to said arithmetic means, said memory unit (78) comprising a read-only memory containing the secant functions of all angles from zero to ninety degrees in small angular increments, said arithmetic means including a high speed multiplying accumulator (72), and a read-only memory controller (71) connected to said computer for controlling sequential operation of said circuit elements.

3. The display system of claim 1 characterised in that the computing means is a collision avoidance computer, a first data memory (65) is connected to receive line records from the collision avoidance system computer in terms of range and bearing of the tangent point together with start and stop ranges and start and stop bearings, the arithmetic means (72) determines by subtraction the subtended angle between the current beam bearing and the bearing to said tangent point as well as the subtended angle for an incremented beam bearing, the memory unit (78) is connected with said arithmetic means (72) and the arithmetic means (72) multiplies the range to the tangent point by the secant of said subtended angle and incremented subtended angle and subtracts one from the other as the range extent of a line at an instantaneous beam bearing, and the said range extent and bearing are applied as the beam unblanking signals.

### Patentansprüche

1. Anzeigesystem zur Anzeige von nicht-radialen Vektorlinien, welche Kurs und Geschwindigkeit von Radarzielen auf einer Rho-Theta-Anzeige eines PPI - Oszillographens (18), welcher nur ein radial geschwenktes Strahlenbündel aufweist, welches umfangsmäßig um die Anzeige positioniert wird, umfassend eine Bereichnungseinrichtung (29) zum Berechnen der Koordinaten von bei einem folgenden Überstreichen anzuzeigenden Punkten und eine Steuereinrichtung (32) zum Vorlauf-Hellsteuern des Strahlenbündels in aufeinanderfolgenden vorgewählten Peilungen und Bereichen, um nichtradiale Linien auf dem PPI - Oszillographen (18) ohne zusätzliche Ablenkung des Strahlenbündels auzuzeigen, gekennzeichnet durch die Anordnung der Berechnungseinrichtung (29) für den Empfang von Radarinformation und zur Erzeugung von Signalen für jedes ausgewählte Ziel, welche eine Zielpeilung (61) verkörpern sowie den Bereich und die Peilung des Tangentenpunktes auf einem Kreis um das Zentrum der Anzeige der anzuzeigenden Vektorlinie, durch eine Speichereinheit (78) zum Speichern von inkrementalen Sekantenfunktionen, durch eine arithmetische Einrichtung (79) zur Berechnung des Produktes des Tangentenpunktbereiches und der Sekante des Winkels zwischen der augenblicklichen Zielpeilung und der Tangentenpunktpeilung, und durch eine Einrichtung (73 bis 77) zum Anwenden der Ergebnisse der Berechnungen, um selektiv das Strahlenbündel der Rho-Theta-Anzeige zur Anzeige von nicht-radialen Linien hell zu steuern.

2. Anzeigesystem nach Anspruch 1, gekennzeichnet durch einen Linienspeicher (65), der zum Empfang von Liniendaten aus dem Computer und zum Anlegen von Liniendaten an die arithmetische Einrichtung angeschlossen ist, wobei die Speichereinheit (78) einen Festwertspeicher (ROM) aufweist, der die Sekantenfunktionen sämtlicher Winkel von Null bis neunzig Grad in kleinen Winkelinkrementen enthält, wobei die arithmetische Einrichtung einen Hochgeschwindigkeitsmultiplizierakkumulator (72) und einen Festwertspeicher-Regler (71) enthält, der mit dem Computer verbunden ist, um die sequentielle Operation der Schaltungselemente zu steuern.

3. Anzeigesystem nach Anspruch 1, dadurch gekennzeichnet, daß die Berechnungseinrichtung ein Kollisionsverhütungscomputer ist, daß ein erster Datenspeicher (65) angeschlossen ist, um Zeilenaufzeichnungen aus dem Kollisionsverhütungssystemcomputer in Bereichsund Zieltermen des Tangentenpunktes zusammen mit Start und Stoppbereichen und Start- und Stoppzielen zu erhalten, daß die arithmetische Einrichtung (72) durch Subtraktion den eingeschlossenen Winkel zwischen der laufenden Strahlenpeilung und der Peilung zum Tangentenpunkt sowie den eingeschlossenen Winkel für eine inkrementierte Strahlenbündelpeilung bestimmt, daß die Speichereinheit (78) mit der arithmetischen Einrichtung (72) verbunden ist, und daß die arithmetische Einrichtung (72) den Bereich zum Tangentenpunkt mit der Sekante des eingeschlossenen Winkels und des inkrementierten eingeschlossenen Winkels multipliziert und einen vom anderen subtrahiert als die Bereichsweite einer Linie bei einer augenblicklichen Strahlenbündelpeilung, und daß diese Bereichsweite und Peilung als Strahlenbündel - Aufhellungssignale verwendet werden.

## Revendications

1. Système d'affichage pour afficher des lignes de vecteur non-radiales représentant la route at la vitesse de cibles de radar sur un affichage en coordonnées polaires (Rhô-thêta) d'un écran (18) indicateur de position panoramique (PPI) comportant seulement un faisceau à balayage radial et à indexation circonférentielle autour de l'affichage, comprenant un organe de calcul (29) calculant les coordonnées de points à afficher lors d'un balayage ultérieur et un organe de commande (32) annulant la suppression du faisceau pour des gisements et distances successifs pré-sélectionnés afin d'afficher des lignes non-radiales sur l'écran PPI (18) sans déviation additionnelle de réseau, caractérisé par ledit organe de calcul (29) qui est disposé pour recevoir une information radar et produire, pour chaque cible sélectionnée des signaux représentant le gisement de la cible (61) et la distance et le gisement du point de tangence de la ligne de vecteur à afficher sur un cercle centré sur le centre de l'affichage, une unité de mémoire (78) mémorisant des valeurs incrémentales de la fonction trigonométrique sécante, un organe arithmétique (79) calculant le produit de la distance du point de tangence et de la sécante de l'angle entre le gisement de la cible instantanée et le gisement du point de tangence et un organe (73—77) appliquant les résultats desdits calculs pour annuler de manière sélective la suppression du faisceau dudit affichage à coordonnées polaires en vue d'afficher des lignes non-radiales.

2. Système d'affichage de la revendication 1, caractérisé par une mémoire de ligne (65) branchée pour recevoir des données de ligne provenant dudit organe de calcul et pour appliquer des données de ligne audit organe arithmétique, ladite unité de mémoire (78) comprenant une mémoire morte contenant les fonctions sécante de tous les angles à partir de 0 à 90° par faibles incréments angulaires, ledit organe arithmétique comprenant un accumulateur multiplicateur (72) à grande vitesse, et un dispositif (71) de commande de mémoire morte branchée audit organe de calcul en vue de commander le fonctionnement séquentiel desdits éléments de circuit.

3. Système d'affichage de la revendication 1, caractérisé en ce que l'organe de calcul est un ordinateur anticollision, en ce qu'une première mémoire de données (65) est branchée pour recevoir des enregistrements de ligne provenant de l'ordinateur du système anticollision, ces enregistrements étant sous la forme de distance et de gisement du point de tangence ainsi que de distances du début et d'arrêt et de gisements de début et d'arrêt, en ce que l'organe arithmétique (72) détermine par soustraction l'angle soustendu entre le gisement du faisceau courant et le gisement dudit point de tangence ainsi que l'angle soustendu pour un gisement de faisceau incrémenté, en ce que l'unité de mémoire (78) est branchée avec ledit organe arithmétique (72) et ce dernier multiplie la distance au point de tangence par la sécante dudit angle sous-tendu et de l'angle sous-tendu incrémenté et soustrait l'un de l'autre en tant que valeur de la distance d'une ligne pour un gisement de faisceau instantané et en ce que ladite valeur de distance et le gisement sont appliqués en tant que signaux d'annulation de la suppression du faisceau.

FIG _ 1

FIG _ 2

FIG _ 3